# EUROPÄISCHE PATENTSCHRIFT

(11) **EP 0 442 432 B1**
(45) Veröffentlichungstag und Bekanntmachung des Hinweises auf die Patenterteilung: **20.01.1993**
(21) Anmeldenummer: 91101915.6
(22) Anmeldetag: 12.02.1991
(51) Int. Cl.: E04B 1/74, F24J 2/04, F24J 2/48

(54) **Bauwerk aus Betonfertigteilen**
Construction made of precast concrete elements
Construction en éléments préfabriqués en béton

(30) Priorität: 15.02.1990 DE 4004666
(43) Veröffentlichungstag der Anmeldung: 21.08.1991
(73) Patentinhaber: Betonbau GmbH, D-68753 Waghäusel (DE)
(72) Erfinder: Primus, Illo-Frank, W-7500 Karlsruhe 41 (DE); Kaute, Christoph, W-7515 Eggenstein-Leopoldshafen (DE)
(74) Vertreter: Hiebsch, Gerhard F., Dipl.-Ing.

(56) Entgegenhaltungen:
- EP-A- 0 209 833
- WO-A-81/00445
- DE-A- 3 411 336
- FR-A- 2 435 674
- US-A- 4 305 381

## Beschreibung

Die Erfindung betrifft ein Bauwerk mit plattenartigen Betonfertigteilen, in die als Wärmeenergieabsorber wirkende Rohre für eine Energieträgerflüssigkeit eingebettet und gegebenenfalls untereinander verbunden sind.

Massivabsorbersysteme in Außenwände von Hochbauten zur Wärmeenergiegewinnung sind bekannt und haben sich als ein wirtschaftlicher Weg zur Gewinnung von Heizenergie bewährt; sie sammeln, speichern und spenden Wärme. Auch sind solche Massivabsorbersysteme umweltfreundlich, da sie keine Abgasemmission verursachen.

Beispielsweise offenbart die DE-OS 31 03 877 eine Garage aus eine vorgefertigten Beton-Raumzelle mit vier Außenwänden, einer Bodenplatte und einer vorzugsweise separat aufsetzbaren Dachplatte, deren Außenwände mit derartigen Absorbersystemen ausgerüstet sind; mit auf diese Weise gesammelter Wärmeenergie können benachbarte Häuser beheizt werden. Die Außenwände und das Dach eigen sich aber nicht für die Speicherung der gesammelten Wärmeenergie, da im Tagesmittel die Wärmeabstrahlung dieser Flächen genauso groß ist wie die Wärmeeinstrahlung. Ohne eine zwischenzeitliche Wärmespeicherung läßt sich aber eine derartige Beheizung von Gebäuden -- zumindest im monovalenten Betrieb -- nicht wirtschaftlich durchführen.

Zur Verbesserung solcher Energiegaragen wurde durch die EP-PS 209 833 vorgeschlagen, eine ins Erdreich eingesetzte Bodenplatte und mindestens eine der Außenwände der Raumzelle auch unterirdisch mit Absorberrohren für die Energieträgerflüssigkeit auszustatten.

Zumeist aber stehen weder am Gebäude eine Fläche für Massivabsorbervorsatzschalen noch die Bodenplatte als Massivspeicher zur Verfügung - sei es, daß die Fassaden, die Mauern oder die Garagen bereits konventionell ausgeführt wurden und abgerissen werden müßten, sei es, daß die Anbringung aus anderen Gründen verhindert ist. In diesen Fällen entfallen mangels ausreichender Grundstücksgröße sowie des Vorhandenseins von Grundwasser auch die alleinigen Wärmequellen Erdreich oder Grundwasser.

Angesichts dieses Standes der Technik hat sich der Erfinder das Ziel gesetzt, die bekannten Nachteile auszuschalten und die Aufstellung ausreichend dimensionierter massiver Betonabsorber zu ermöglichen. Es soll für einen möglichst kleinen freien Platz außerhalb des Gebäudes ein Massivabsorber entstehen, der zusätzlich aufgestellt werden kann, alle technischen und wirtschaftlichen Voraussetzungen erfüllt, nicht störend wirkt und nach Möglichkeit eine oder mehrere weitere Funktion zu übernehmen in der Lage ist.

Zur Lösung dieser Aufgabe führt, daß das Bauwerk der eingangs genannten Art aus mehr als zwei gesonderten, die Rohrschlangen enthaltenden Platten besteht, die radial an einer Mittelachse zu einer säulenartigen Konstruktion zusammengesetzt sind, zumindest teilweise in radialem Abstand zueinander verlaufen sowie mit etwa einem Drittel ihrer Wärmeentzugsfläche unterirdisch angeordnet sind.

Dabei soll in die Platte eines - bevorzugt in zwei jeweils einer der Plattenoberfläche nahen Ebenen angeordnete -- mäanderartig gebogene Rohrschlange von 80 bis 120 m Länge eingebettet sein; als wirtschaftlichste Größe eines Absorberkreises stellt sich eine Absorberkreis-Rohrschlange von 120 bis 160 m dar. Geht man von ca. 20 m für die Zuleitung und 20 m für die Rückführung der Absorberkreis-Rohrlänge aus, hat der Beton-Absorber zwischen 80 und 120 laufende Meter (lfdm) Rohrlänge aufzunehmen. Bei einer Belegungsdichte von 7 lfdm m je m² ergibt sich eine flächige Absorbergröße zwischen 12 und 20 m². Da bei einem freistehenden flächigem Fertigteil von beiden Flächen Wärme der Außenluft entziehbar ist -- also an beiden Flächenseiten Absorberrohre einbetoniert werden können --, ergibt sich im Mittel ein Fertigteil in der Größe von 6 m² bis 10 m². So erfüllt z. B. ein Betonabsorber in den Abmessungen 1 m x 6 m diese Voraussetzungen für einen Absorberkreis.

Nach einem weiteren Merkmal der Erfindung ist die Platte L-förmig ausgebildet sowie mit ihrem Querbalken wenigstens teilweise unterirdisch angeordnet. Diese Platten sollen im Bereich der Schmalseiten ihrer Querbalken einander benachbart und bevorzugt an diesen miteinander verbunden sein.

Die Oberkanten der beschriebenen Querbalken weisen bei den eingegrabenen Platten aufwärts und bestimmen mit ihrer Länge den -- halben -- Abstand der Platteninnenkanten voneinander, die einen offenen Innenraum begrenzen. Dieser vermag beispielsweise Pflanzengerüste aufzunehmen, die dem ganzen Bauwerk ein besonders günstiges Aussehen verleihen, darüber hinaus aber auch der Aufnahme besonders wärmebedürftiger Pflanzen dienen können.

Möglich ist es aber auch, wenigstens einen Absorberkreislauf des Bauwerks an eine Dusche, eine Berieselungseinrichtung od. dgl. Abgabelemente anzuschließen.

Erfindungsgemäß werden bevorzugt vier Absorberkreis-Betonelemente grundrißlich als Kreuz oder mehr als deren vier in Form eines Sternes zu einer Gartensäule zusammengestellt. Die Höhe dieser Gartensäule über Erdreich wird auf unter vier Meter und deren Eingrabtiefe auf rund 2,50 m begrenzt, und die Elemente werden oberirdisch im Abstand zueiander angeordnet, damit eine Umspülung mit Luft und Wind erleichtert wird.

Das erfindungsgemäße Bauwerk kann beispielsweise aus L-förmiger Platten bestehen, die jeweils an ihrer dem Querbalken entfernt liegenden Schmalkante mit parallel zum schulterartigen Absatz seitlich abkragenden Firststegen versehen sind, wobei mehrere Platten mit Querbalken und Firststeg aneinanderstoßend festliegen.

Auch liegt es im Rahmen der Erfindung, daß zwei L-förmige Platten zu eine U-artigen Bogen mit gemeinsamer Rohrschlange einstückig hergestellt sind, oder aber in einer anderen Ausführung mit den Schmalseiten ihrer Querbalken rechtwinkelig einstückig sind und dieses Winkelstück eine gemeinsame Rohrschlange aufweist.

Zwei dieser Bogen bzw. Winkelstücke können auch gegenläufig zueinander vorgesehen und ihrer schulterartigen Absäte in Abstand zueinander gehalten sein.

Das beschrieben Bauwerk wird als Energie-Säule eingesetzt, kann jedoch sogar für die monovalente Heizung eines Einfamilienhauses herangezogen werden, wenn mindestens zwei weitere Absorber-Elemente ergänzend hinzukommen, z. B. reine Erdabsorber, Grabenkollektoren od. dgl., aber auch eine Garagenlängswand, Terrassenabgrenzungswände, Brüstungswände od. dgl., die als alleinige Absorber den Aufwand für die Installation einer umweltfreundlichen Heizung nicht rechtfertigen würden.

Die Energie-Säule nimmt weniger als drei Meter Durchmesser im Grundriß in Anspruch, so daß sie auf nahezu jedem Grundstück noch aufstellbar ist.

Außer zu einem Stützgerüst für Blumenkästen oder für rankende Pflanzen kann die Säule auch zu eine im Sommer in Betrieb befindlichen Springbrunnen, Fontainenbrunnen, zu einer Duschanlage, einer Wasserzapfstelle oder zu einem Sitzplatz etc. ergänzt werden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:
Fig. 1: eine Schrägsicht auf ein aus Platten bestehendes säulenartiges Bauwerk;
Fig. 2: den Grundriß zu Fig. 1;
Fig. 3: die Seitenansicht einer Platte;
Fig. 4: eine Stirnansicht der Platte;
Fig. 5: die Seitenansicht gemäß Fig. 3 mit einem Rohrschlangensystem;
Fig. 6: einen Teil der Fig. 5 in Stirnansicht;
Fig. 7: die Seitenansicht des Bauwerkes der Fig. 1;
Fig. 8: den vergrößerten Teilgrundriß zu Fig. 7;
Fig. 9: den Blick auf das Bauwerk der Fig. 7,8 in Richtung des Pfeiles IX der Fig. 8;
Fig.10: eine Seitenansicht zu einer anderen Ausführungsform des Bauwerks;
Fig. 11: den Grundriß zu Fig. 10;
Fig. 12: die Sicht auf Fig. 10 in Pfeilrichtung XII der Fig. 11;
Fig. 13: einen vergrößerten Teilgrundriß zu Fig. 11;
Fig. 14-Fig. 17: Schrägsichten auf andere Ausführungsformen;
Fig. 18: eine vergrößerte Frontansicht zu einem Detail der Fig. 10 bis 12.

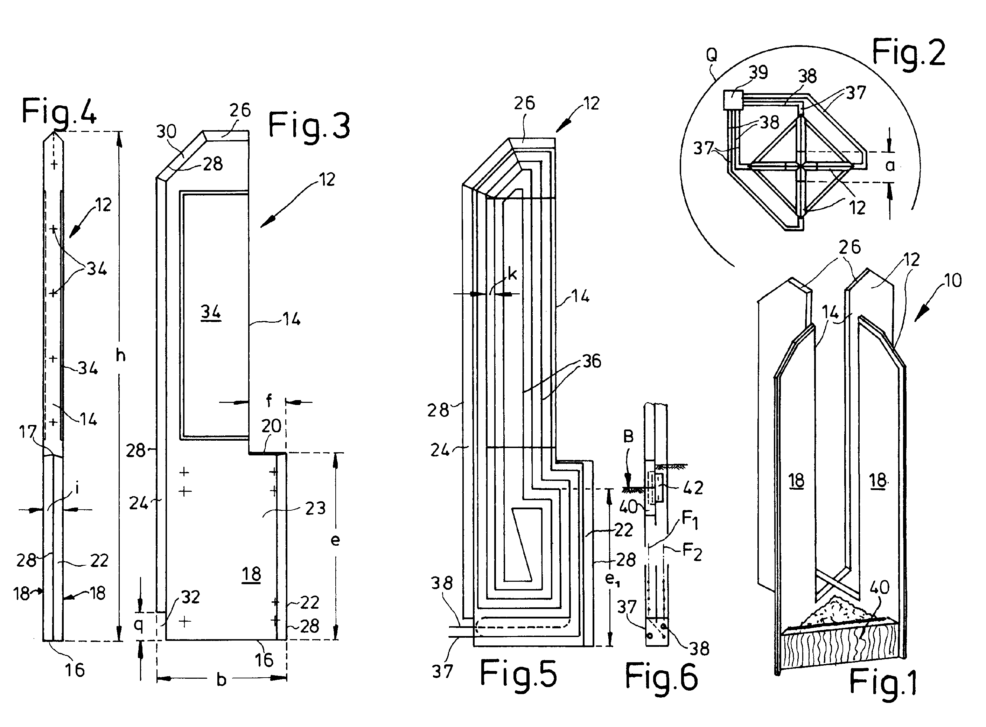

Ein säulenartiges Bauwerk 10 weist gemäß Fig. 1 vier von eine in Fig. 2 angedeuteten kreuzförmigen Grundriß aufragende Platten 12 auf, von denen jeweils zwei miteinander fluchten, deren einander zugekehrte Innenkanten 14 zueinander in eine Abstand a von beispielsweise 80 cm verlaufen.

Jede der Platten 12 einer Höhe h von beispielsweise 600 cmm, einer größten Breite b von 140 cm sowie einer Dicke i von 22 cm ist in einem Abstand e von etwa 200 cm zur Plattenunterseite 16 mit einem -- von einer Kammlinie 17 zu beiden Seitenflächen 18 hin geneigten -- schulterartigem Absatz 20 der Länge f von etwa 40 cm versehen, von dem jene Innenkante 14 ausgeht. Sowohl eine vom schulterartigen Absatz 20 nach unten verlaufende Schmalseite 22 als auch die -- ebenfalls schmale -- Außenseite 24 und die Firstseite 26 der Platte 12 sind beidseits so angefast, daß von einer querschnittlichen Spitze eine Bugkante 28 gebildet wird. Zudem ist die von Außenseite 24 und Firstseite 26 gebildete Ecke bei 30 gebrochen und an der dazu vertikalen unteren Ecke eine Ausnehmung 32 der Höhe q von 30 cm vorhanden.

Im oberen Teil der Platte 12 ist eine rechteckige Vertiefungsfläche 34 vorgesehen, die an der Innenkante 14 endet.

In den Beton der Platte 12 ist ein Absorberkreislauf aus einer Rohrschlange 36 eingebettet, der sich vom einem Eingang 37 zu einem Ausgang 38 erstreckt. Der Abstand k der parallelen Rohrabschnitte der Rohrschlange 36 voneinander beträgt etwa 10 cm, zudem verläuft gemäß Fig. 6 die Rohrschlange 34 in zwei parallelen Ebenen F₁, F₂.

Innerhalb eines den Grundriß in Fig. 2 umschreibenden Kreises ist ein Verteiler 39 vorgesehen, an dem die einzelnen Kreise zuleitungs- und fortleitungsseitig zusammengefaßt sind und von dem aus Sammelleitungen zu einer Wärmepumpe führen.

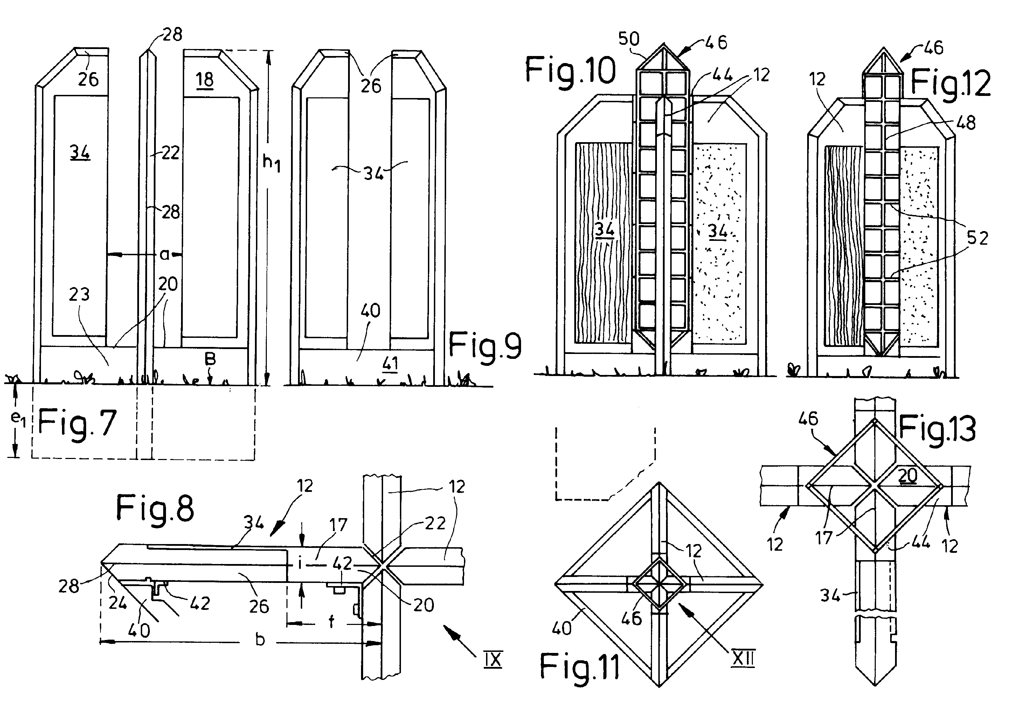

Der untere Plattenabschnitt ist in eine Höhe e₁ in das Erdreich eingelassen; mit B ist die Erdreichoberkante bezeichnet. Die Platten 12 des Bauwerkes 10 sind oberhalb der Erdreichoberkante B durch Sockelstreifen 40 miteinander verbunden, deren Außenfläche 41 jeweils mit den angrenzenden Flächen der Außenseiten 24 fluchtet, wie dies aus Fig. 8 hervorgeht. Dort wird auch gezeigt, daß die Platten 12 miteinander sowie mit den Sockelstreifen 40 durch Winkellaschen 42 verbunden sind. Der schulterartige Absatz 20 erlaubt es, die Platten 12 in ihrem unteren Bereich aneinanderzufügen und oberirdisch einen Abstand a zu belassen, der eine Umspülung mit Luft und Wind ermöglicht. Dank der genannten Eingrabtiefe e₁ wird an besonders kalten Tagen dem Erdreich als Energie Speicherwärme entzogen.

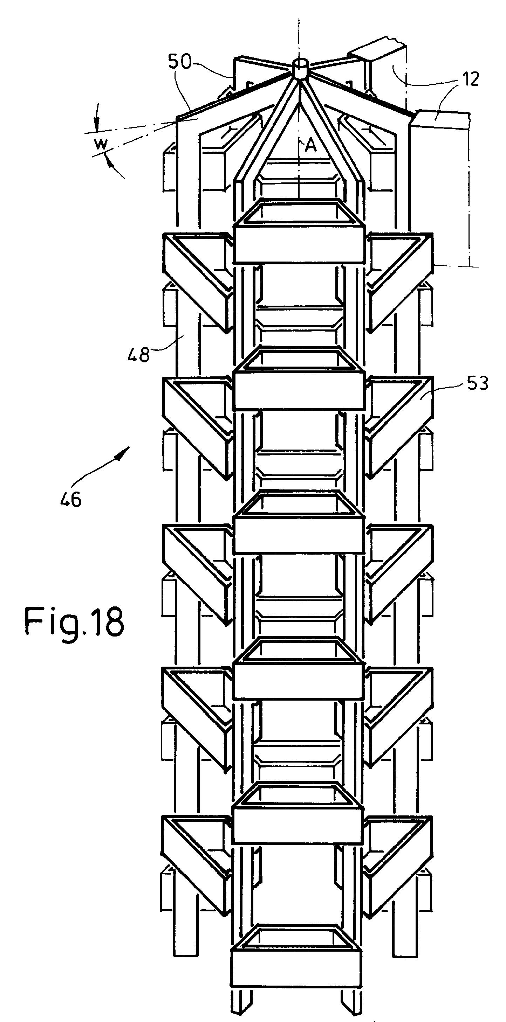

Das Ausführungsbeispiel der Fig. 10 bis 13 zeigt, daß in einem durch den Abstand a der Platteninnenkanten 14 bestimmten und von diesen Innenkanten 14 begrenzten Zentralraum 44 ein zusätzliches Rankgestell 46 aus Metall-, Holz- oder Kunststoffprofilen eingesetzt wird, welches nicht wiedergegebenem Bewuchs als Halteelement dient. Dieses Rankgestell 46 kann in einer beispielhaft in Fig. 18 angedeuteten Massivausführung auch als Verbindungselement für die Platten 12 dienen; diese können an vertikalen Gestellprofilen 48 festgelegt werden. Diese Gestellprofile 48 sind durch jeweils einen an ihrem oberen Ende in einem Winkel w nach oben geneigten Jocharm 50 in der Bauwerksachse A sowie in unterschiedlichen Höhen durch Sprossen 52 oder Pflanztröge 53 miteinander zu einer Einheit verbunden .

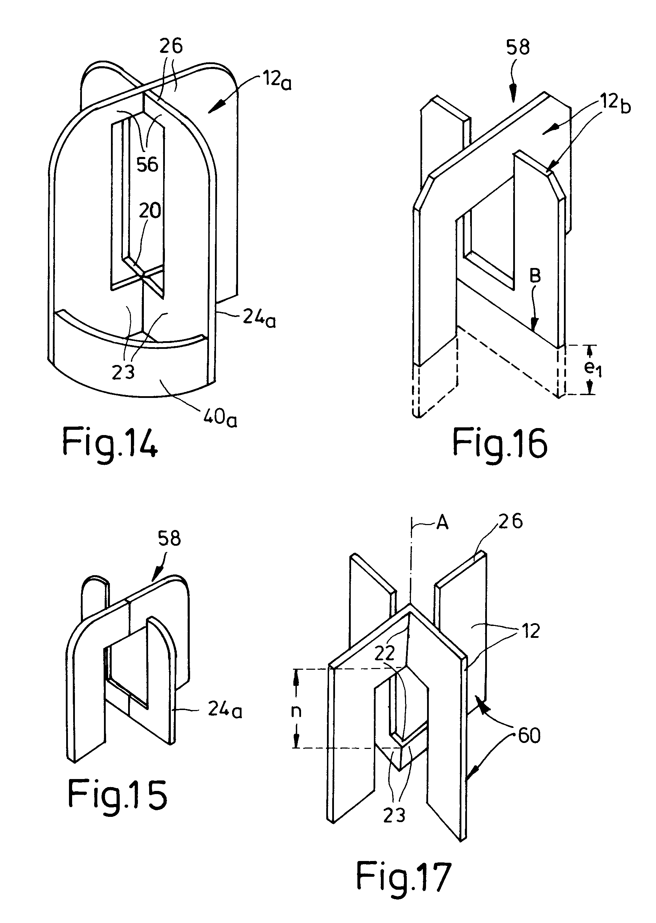

Beim Ausführungsbeispiel der Fig. 14 sind die Platten 12ₐ im Bereich ihrer Firstkante 26 mit einem etwa horizontal abkragenden Firststeg 56 versehen und mittels dieser Firststege 56 zusammengefügt. Die Sockelstreifen 40ₐ sind hier teilkreisartig gekrümmt, die Schmalkanten 24ₐ an den Außenecken gerundet.

Gemäß Fig. 15 sind jeweils zwei L-förmige Platten zu einem U-förmigen Bogen 58 verbunden; in einen nach oben offenen Bogen 58 ist rechtwinklig ein nach unten offener Bogen 58 eingesetzt. Die Ecken der Bogen 58 können gerundet oder gemäß Fig. 16 gebrochen sein. Diese Fig. 16 zeigt, daß die Bogen 50 jeweils als einstückige Platten 12 ausgebildet sein können.

Beim Bauwerk der Fig. 17 sind jeweils zwei L-förmige Platten 12 mit den Schmalseiten 22 ihres Querbalkens 23 rechtwinklig zu einem grundrißlichen Winkelstück 60 zusammengesetzt; zwei derartige Winkelstücke 60 sind gegenläufig zueinander angeordnet, d. h. die Ecken ihrer Grundrisse liegen etwa in der Bauwerksachse A in Abstand n übereinander.

Die Absorberkreis-Betonelemente oder Platten 12, 12ₐ, 12_{b} können auch in Form eines Sternes aus beispielsweise sechs Platten 12 zum säulenartigen Bauwerk zusammengefügt sein, gegebenenfalls mit einer freien Höhe h₁ unter 400 cm bei einer Eingrabtiefe e₁ von etwa 250 cm.

In der Zeichnung ist nicht wiedergegeben, daß das Bauwerk 10 mit einer Dusche od. dgl. Abgabeeinrichtung versehen ist, deren Wasser durch den Absorber temperiert gehalten wird.

## Patentansprüche

1. Bauwerk mit plattenartigen Betonfertigteilen, in die als Wärmeenergieabsorber wirkende Rohre für eine Energieträgerflüssigkeit eingebettet und gegebenenfalls miteinander verbunden sind,
dadurch gekennzeichnet,
daß das Bauwerk (10) aus mehr als zwei gesonderten, die Rohrschlange/n (36) enthaltenden Platten (12,12ₐ,12_{b}) besteht, die radial an einer Mittelachse (A) zu einer säulenartigen Konstruktion zusammengesetzt sind, zumindest teilweise in radialem Abstand (a) zueinander verlaufen sowie mit etwa einem Drittel (e¹) ihrer Wärmeentzugsfläche unterirdisch angeordnet sind.

2. Bauwerk nach Anspruch 1, dadurch gekennzeichnet, daß in die Platte (12,12ₐ,12_{b}) wenigstens eine Rohrschlange (36) von 80 bis 120 m eingebettet ist.

3. Bauwerk nach Anspruch 1 oder 2, dadurch gekennzeichnet, daß die Rohrschlange (36) doppellagig und an beiden Oberflächen (18) der Platte (12,12ₐ,12_{b}) vorgesehen ist.

4. Bauwerk nach einem der Ansprüche 1 bis 3, dadurch gekennzeichnet, daß die Platte (12) L-förmig ausgebildet ist sowie mit ihrem Querbalken (23) wenigstens teilweise unterirdisch verläuft.

5. Bauwerk nach Anspruch 1 oder 4, dadurch gekennzeichnet, daß die Platten (12)im Bereich der Schmalseiten (22) ihrer Querbalken (23) einander benachbart und bevorzugt an diesen miteinander verbunden sind.

6. Bauwerk nach wenigstens einem der Ansprüche 1 bis 5, dadurch gekennzeichnet, daß die Länge (f) von schulterartigen Absätzen (20) der Querbalken den Abstand der Innenkanten (14) ihrer jeweils von dem Absatz abragenden Abschnitte bestimmt.

7. Bauwerk nach wenigstens einem der Ansprüche 1 bis 6, dadurch gekennzeichnet, daß zwischen den Innenkanten (14) der Platten (12,12ₐ,12_{b}) wenigstens ein Pflanzgerüst oder Rankgestell (46) festgelegt ist.

8. Bauwerk nach wenigstens einem der Ansprüche 1 bis 7, dadurch gekennzeichnet, daß die Platten (12,12ₐ,12_{b}) durch das Pflanzgerüst (46) verbunden sind.

9. Bauwerk nach wenigstens einem der Ansprüche 1 bis 8, gekennzeichnet durch einen kreuzförmigen oder steinartigen Grundriß des Bauwerkes aus den Platten (12,12ₐ,12_{b}).

10. Bauwerk nach Anspruch 9, dadurch gekennzeichnet, daß innerhalb eines den Bauwerksgrundriß umschreibenden Kreises (Q) ein Verteiler (39) für die Leitungen (37,38) der Absorberkreisläufe (36) angeordnet ist.

11. Bauwerk nach Anspruch 10, dadurch gekennzeichnet, daß die Leitung (37,38) am Verteiler (39) mit einem Sperrorgan versehen ist.

12. Bauwerk nach wenigstens einem der Ansprüche 1 bis 11, dadurch gekennzeichnet, daß wenigstens ein Absorberkreislauf (36) des Bauwerkes (10) an eine Dusche, eine Berieselungseinrichtung od. dgl Abgabeelemente angeschlossen ist.

13. Bauwerk nach wenigstens einem der Ansprüche 1 bis 12, dadurch gekennzeichnet, daß die L-förmige Platte 12ₐ an ihrer dem Querbalken (23) entfernt liegenden Schmalkante (26) mit parallel zum schulterartigen Absatz (20) seitlich abkragenden Firststegen (56) versehen ist und mehrere Platten mit Querbalken und Firststeg aneinanderstoßend angeordnet sind.

14. Bauwerk nach wenigstens einem der Ansprüche 1 bis 13, dadurch gekennzeichnet, daß jeweils zwei der freien Kanten (24) der Querbalken (23) der Platten (12,12ₐ) eines Bauwerks (10) miteinander durch Sockelstreifen (40,40ₐ) verbunden sind.

15. Bauwerk nach wenigstens einem der Ansprüche 1 bis 12, dadurch gekennzeichnet, daß zwei L-förmige Platten zu einem U-artigen Bogen (58) mit gemeinsamer Rohrschlange (36) einstückig hergestellt sind.

16. Bauwerk nach wenigstens einem der Ansprüche 1 bis 12, dadurch gekennzeichnet, daß zwei L-förmige Platten mit den Schmalseiten (22) ihrer Querbalken (23) rechtwinkelig einstückig hergestellt sind und das Winkelstück (60) eine gemeinsame Rohrschlange (36) aufweist.

17. Bauwerk nach Anspruch 15 oder 16, dadurch gekennzeichnet, daß zwei der Bogen (58) bzw. Winkelstücke (60) gegenläufig zueinander vorgesehen und ihre schulterartigen Absätze (20) in Abstand (n) zueinander gehalten sind.

## Claims

1. Construction comprising precast concrete elements in the form of panels in which pipes for an energy transfer liquid acting as heat energy absorbers are embedded and if necessary connected to one another, characterised in that the construction (10) consists of more than two separate panels (12, 12ₐ, 12_{b}) containing the pipe coil(s) (36) which are assembled radially to a centre axis (A) to form a columnar construction, extend at least partially at a radial distance (a) from one another and are arranged with approximately a third (e¹) of their heat-absorption surface underground.

2. Construction according to claim 1, characterised in that at least one pipe coil (36) of 80 to 120 m is embedded in the panel (12, 12ₐ, 12_{b}).

3. Construction according to claim 1 or claim 2, characterised in that the pipe coil (36) is a double layer pipe coil provided on both surfaces (18) of the panel (12, 12ₐ, 12_{b}).

4. Construction according to one of claims 1 to 3, characterised in that the panel (12) is L-shaped and extends at least partially underground via its transverse beam (23).

5. Construction according to claim 1 or claim 4, characterised in that the panels (12) are adjacent to one another in the region of the narrow sides (22) of their transverse beams (23) and are preferably connected to one another at these transverse beams.

6. Construction according to at least one of claims 1 to 5, characterised in that the length (f) of shoulders (20) of the transverse beams define the distance of the inner edges (14) from their respective sections projecting from the shoulder.

7. Construction according to at least one of claims 1 to 6, characterised in that at least one climbing frame for plants (46) is secured between the inner edges (14) of the panels (12, 12ₐ, 12_{b}).

8. Construction according to at least one of claims 1 to 7, characterised in that the panels (12, 12ₐ, 12_{b}) are connected by the climbing frame (46).

9. Construction according to at least one of claims 1 to 8, characterised by a cruciform or star-shaped outline of the construction made from the panels (12, 12ₐ, 12_{b}).

10. Construction according to claim 9, characterised in that a distributor (39) for the conduits (37, 38) of the absorber circuits (36) is arranged within a circle (Q) inscribing the outline of the construction.

11. Construction according to claim 10, characterised in that the conduit (37, 38) on the distributor (39) is provided with a locking member.

12. Construction according to at least one of claims 1 to 11, characterised in that at least one absorber circuit (36) of the construction (10) is connected to a shower, a watering device or similar delivery elements.

13. Construction according to at least one of claims 1 to 12, characterised in that the L-shaped panel (12ₐ) is provided with ridge webs (56) projecting laterally parallel to the shoulder (20) on its narrow side (26) situated at a distance from the transverse beam (23), and a plurality of panels with transverse beam and ridge web are disposed in an abutting arrangement.

14. Construction according to at least one of claims 1 to 13, characterised in that two of the free ends (24) of the transverse beams (23) of the panels (12, 12ₐ) of a construction (10) are connected to one another by means of base plates (40, 40ₐ).

15. Construction according to at least one of claims 1 to 12, characterised in that two L-shaped panels are produced in one piece to form a U-shaped arch (58) with a common pipe coil (36).

16. Construction according to at least one of claims 1 to 12, characterised in that two L-shaped panels are produced in one piece with the narrow sides (22) of their transverse beams (23) at right angles to one another and the angle (60) has a common pipe coil (36).

17. Construction according to claim 15 or claim 16, characterised in that two of the arches (58) or angles (60) are provided in opposite directions to one another and their shoulders (20) are held at a distance (n) from one another.

## Revendications

1. Construction comprenant des éléments préfabriqués en béton en forme de plaque, dans lesquels sont noyés des tubes qui font office d'absorbeur d'énergie calorifique, qui sont destinés à un liquide vecteur d'énergie, et qui, le cas échéant, sont relies entre-eux, caractérisée en ce que la construction (10) est constituée par plus de deux plaques individuelles (12, 12a, 12b) qui renferment le ou les serpentin(s) tubulaire(s) (36), qui sont assemblées radialement sur un axe central (A) pour former une construction en forme de colonne, s'étendent au moins en partie à distance radiale (a) les unes des autres, et sont agencées sous terre avec environ un tiers (e₁) de leur surface de captage de chaleur.

2. Construction selon la revendication 1, caractérisée en ce que dans la plaque (12, 12a, 12b) est noyée au moins un serpentin tubulaire (36) de 80 à 120 m.

3. Construction selon la revendication 1 ou 2, caractérisée en ce que le serpentin tubulaire (36) est prévu en deux couches et au niveau des deux surfaces exterieures (18) de la plaque (12, 12a, 12b).

4. Construction selon l'une des revendications 1 à 3, caractérisée en ce que la plaque (12) est réalisée en forme de "L", et s'étend au moins partiellement sous terre avec sa base transversale (23).

5. Construction selon la revendication 1 ou 4, caractérisée en ce que les plaques (12) sont voisines les unes des autres dans la zone des côtés étroits (22) de leurs bases transversales (23), et sont reliées entre-elles de préférence au niveau de ces côtés étroits.

6. Construction selon l'une au moins des revendications 1 à 5, caractérisée en ce que la longueur (f) de talons (20) en forme d'épaulement, des bases transversales (23), détermine l'espacement des bords intérieurs (14) de leurs tronçons respectifs s'élevant chacun à partir du talon.

7. Construction selon l'une au moins des revendications 1 à 6, caractérisée en ce qu'entre les bords intérieurs (14) des plaques (12, 12a, 12b) est fixé au moins une structure de plantation ou un treillis (46) pour plantes grimpantes.

8. Construction selon l'une au moins des revendications 1 à 7, caractérisée en ce que les plaques (12, 12a, 12b) sont reliées par la structure de plantation (46).

9. Construction selon l'une au moins des revendications 1 à 8, caractérisée par une coupe horizontale en forme de croix ou d'étoile de la construction réalisée au moyen des plaques (12, 12a, 12b).

10. Construction selon la revendication 9, caractérisée en ce qu'à l'intérieur d'un cercle (Q) circonscrit à la coupe horizontale de la construction, est disposée une pièce d'embranchement (39) pour les conduites (37, 38) des circuits d'absorption (36).

11. Construction selon la revendication 10, caractérisée en ce que la conduite (37, 38) est pourvue, sur la pièce d'embranchement (39), d'un organe d'arrêt.

12. Construction selon l'une au moins des revendications 1 à 11, caractérisée en ce qu'au moins un circuit d'absorption (36) de la construction (10), est raccorde à une douche, un dispositif d'arrosage ou un autre élément de distribution analogue.

13. Construction selon l'une au moins des revendications 1 à 12, caractérisée en ce que la plaque (12a) en forme de "L" est pourvue, au niveau de son bord étroit (26) éloigné de la base transversale (23), de nervures de sommet (56) en saillie latérale et parallèles au talon (20) en forme d'épaulement, plusieurs plaques étant disposées de manière à ce que leurs bases transversales et leurs nervures de sommet soient jointives.

14. Construction selon l'une au moins des revendications 1 à 13, caractérisée en ce que les bords libres (24) des bases transversales (23) des plaques (12, 12a) d'une construction (10) sont reliées deux par deux par une bande de base (40, 40a).

15. Construction selon l'une au moins des revendications 1 à 12, caractérisée en ce que deux plaques en forme de "L" sont fabriquées d'un seul tenant pour constituer un cintre (58) en forme de "U" comportant un serpentin tubulaire (36) commun.

16. Construction selon l'une au moins des revendications 1 à 12, caractérisée en ce que deux plaques en forme de "L" sont fabriquées d'un seul tenant, à angle droit avec les côtés étroits (22) de leurs bases transversales (23), l'élément coudé (60) comportant un serpentin tubulaire (36) commun.

17. Construction selon la revendication 15 ou 16, caractérisée en ce que deux des cintres (58) ou des éléments coudés (60) sont prévus de manière inversée l'un par rapport à l'autre, leurs talons (20) en forme d'épaulement étant maintenus à une distance (n) les uns des autres.
